**Europäisches Patentamt**

**European Patent Office**

**Office européen des brevets**

(19)

(11) Numéro de publication: **0 028 192**
**B1**

(12) # FASCICULE DE BREVET EUROPEEN

(45) Date de publication du fascicule du brevet:
09.11.83

(21) Numéro de dépôt: 80401505.5

(22) Date de dépôt: 23.10.80

(51) Int. Cl.³: **F 16 H 3/04,** F 16 H 3/08,
F 16 H 5/16, B 60 T 1/00,
B 60 K 17/04

(54) **Multiplicateur de gammes pour l'entraînement en rotation d'un arbre transmetteur de puissance et application aux véhicules automobiles.**

(30) Priorité: 25.10.79 FR 7926471

(43) Date de publication de la demande:
06.05.81 Bulletin 81/18

(45) Mention de la délivrance du brevet:
09.11.83 Bulletin 83/45

(84) Etats contractants désignés:
CH DE GB LI

(56) Documents cités:
**DE - A - 2 620 972**
**US - A - 4 122 731**
**US - D - 358 244**

(73) Titulaire: **ETAT-FRANCAIS représenté par le DELEGUE GENERAL POUR L'ARMEMENT, Bureau des Brevets et Inventions de la Délégation Générale pour l'Armement 14, rue Saint-Dominique, F-75997 Paris Armées (FR)**

(72) Inventeur: **Laroze, Maurice, 82, Boulevard Masséna Appartement 307, F-75648 Paris Cedex 13 (FR)**
Inventeur: **Dessemond, René, 26, rue Branly, F-42300 Riorges (FR)**

Multiplicateur de gammes pour l'entraînement en rotation d'un arbre transmetteur de puissance
et application aux véhicules automobiles

La présente invention est relative aux dispositifs qui sont mis en oeuvre pour modifier les gammes de vitesses de rotation ou de couples transmises à un arbre récepteur à partir d'un organe moteur quelconque.

Dans le domaine technique ci-dessus, il est connu de modifier l'entraînement en faisant varier les caractéristiques de l'organe moteur. A cette fin, il est connu d'utiliser une boîte de vitesses lorsque l'organe moteur est du type thermique ou, par exemple, encore de faire varier le débit d'une pompe dans le cas d'installation de puissance du type hydraulique.

Dans le premier cas, les possibilités de variation sont définies par les caractéristiques de la boîte de vitesses et, dans certaines applications, on ressent le besoin de fournir des possibilités supplémentaires généralement intermédiaires aux rapports introduits par la constitution propre de la boîte de vitesses. Pour ce faire, il est connu de mettre en oeuvre des organes intermédiaires multiplicateurs ou démultiplicateurs mais ces éléments sont le plus souvent incorporés à la boîte de vitesses et ont l'inconvénient de surcharger notablement cette dernière au point de rendre son exécution complexe et difficile et son utilisation délicate et de transformer des couples ou des vitesses de rotation élevés.

Dans le cas d'installation du type hydraulique, les possibilités de variation offertes par les gammes de débits des pompes connues ne permettent pas de répondre à toutes les exigences d'utilisation. On a proposé, dans certaines réalisations, de compléter les pompes à débit variable par des moteurs à cylindrée variable, mais alors, dans un tel cas, si une gamme de variation plus importante peut intervenir en modifiant les caractéristiques de l'un ou des deux composants, il est néanmoins fréquent qu'il ne puisse pas être obtenu des vitesse de rotation élevées et/ou des couples élevés de l'arbre récepteur chargé de transmettre la puissance aux organes d'utilisation.

Le brevet US-A-4 122 731 propose un multiplicateur de gammes pouvant être interposé sur une installation d'entraînement en rotation d'un arbre récepteur, entre un arbre d'entrée et un arbre de sortie et fait intervenir au moins deux lignes d'arbres dont chacune engrène, par un pignon d'attaque avec la denture interne d'un pignon cloche à l'intérieur duquel les pignons d'attaque sont logés. Le pignon cloche est prolongé par l'arbre de sortie dont la rotation peut être exploitée directement ou par l'intermédiaire d'un train planétaire.

Les deux pignons d'attaque sont montés sur des arbres qui sont placés en relation d'entraînement avec des pignons par l'intermédiaire de deux embrayages commandés hydrauliquement. Les pignons d'entraînement sont entraînés en rotation simultanée dans le même sens par l'intermédiaire d'un pignon menant entraîné par un organe moteur quelconque.

Mais les embrayages hydrauliques sont du type à position de repos débrayée et, par suite, il n'est pas possible d'utiliser le mécanisme décrit en tant qu'élément de verrouillage ou de blocage.

L'invention propose un multiplicateur de gammes tout particulièrement conçu pour qu'à l'état de repos il représente un organe d'immobilisation efficace et sûr contre tout entraînement en rotation intempestive de l'arbre récepteur.

Le fonctionnement peut être en outre subordonné à tout type d'énergie utilisée, indifféremment pneumatique, hydraulique, électrique ou électronique, voire purement mécanique.

De plus, il est conçu de manière à permettre un changement de gamme entre l'organe moteur et l'organe récepteur, même et surtout durant un fonctionnement en charge, sans qu'il en résulte de modifications perceptibles et sensibles de l'entraînement en rotation de l'organe récepteur.

Un but supplémentaire de l'invention est que la conception retenue permet de réaliser un dispositif compact mais néanmoins capable, par ses organes constitutifs, de supprimer les solutions de contuité entre les courbes de couples et de vitesses.

L'invention a donc pour objekt un multiplicateur des gammes pour l'entraînement en rotation d'un arbre transmetteur de puissance comprenant un carter contenant un arbre de sortie solidaire d'une grande couronne, un arbre d'entrée muni d'un pignon menant et une pluralité de lignes d'arbres qui sont chacune, d'une part, munie d'un pignon d'attaque en prise permanente avec la grande couronne et, d'autre part, associée à un pignon d'entraînement en rotation à partir du pignon menant, le pignon d'entraînement étant associé à un embrayage, caractérisé en ce que l'embrayage de chaque ligne d'arbres est du type à état de repos embrayé, conférant au multiplicateur, en état inerte, une fonction de blocage et d'immobilisation angulaire entre l'arbre de sortie et l'arbre d'entrée par l'intermédiaire des lignes d'arbres.

Diverses autres caractéristiques de l'invention ressortent de la description faite ci-dessous en référence aux dessins annexés.

La fig. 1 est une vue transversale de l'objet de l'invention,

La fig. 2 est une soupe prise selon la ligne brisée II-II de la fig. 1,

La fig. 3 est une vue schématique illustrant plus clairement la constitution du multiplicateur selon la fig. 2,

Les fig. 4 et 5 représentent des exemples schématiques d'application du dispositif.

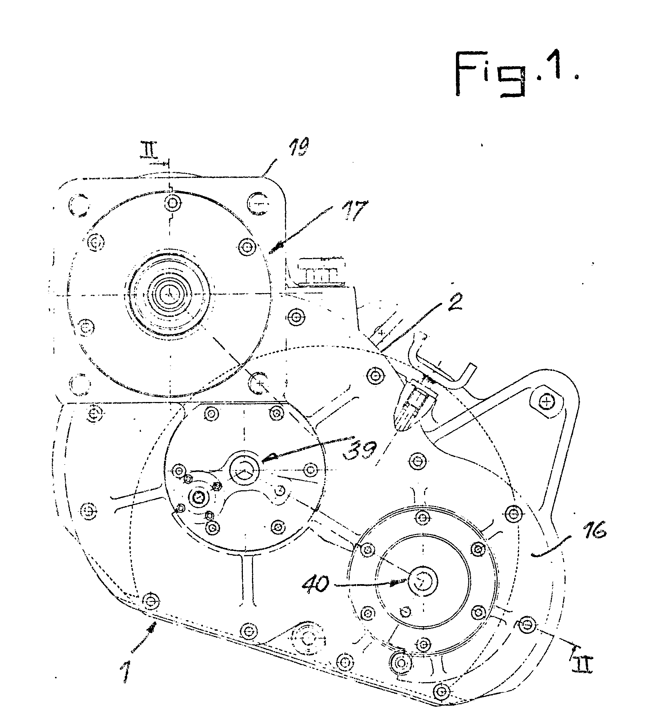

Les fig. 1 à 3 montrent que le multiplicateur de gammes, conforme à l'invention, comprend un carter 1 constitué par deux demi-corps 2 et 3 assemblés entre eux par des vis 4. Les demi-corps 2 et 3 sont chacun fermés sur leur face en regard par une cloison 5 et 6 et délimitent ainsi deux chambres indépendantes 7 et 8.

Le demi-corps 2 supporte un arbre de sortie 9 qui est monté dans deux paliers 10 et 11 respectivement prévus au niveau du nez du demicorps 2 ainsi que dans la cloison correspondante 5. L'arbre de sortie 9 supporte une grande couronne 12 occupant la chambre 7 et se trouvant immobilisé axialement et angulairement sur l'arbre 9.

Le demi-corps 3 supporte intérieurement un arbre d'entrée 13 qui est porté par deux paliers 14 et 15 respectivement prévus dans le flasque arrière 16 du demi-corps 3 et dans la cloison frontale 6 de ce dernier. L'arbre d'entrée 13 est destiné à être rendu solidaire angulairement d'un organe d'entraînement 17 pouvant être constitué par un moteur 18, par exemple, adapté sur une bride 19 formée par le flasque 16. L'organe moteur 17 peut également être constitué par tout arbre d'entraînement ou tout arbre de sortie d'un organe moteur non directement adapté sur le flasque 16. L'organe moteur peut, dans cet esprit, être constitué par l'arbre de sortie d'une boîte de vitesses, par exemple, ou encore par l'arbre de sortie d'un moteur hydraulique.

Les cloisons 5 et 6 et le flasque 16 délimitent des paliers alignés pour le support d'une pluralité de lignes d'arbres A et, par exemple, B dans le cas de constitution faisant intervenir, comme illustré aux dessins, deux lignes d'arbres parallèles. Il est toutefois certain que le multiplicateur de gammes peut comporter un nombre de lignes d'arbres supérieur à deux.

Chaque ligne d'arbres comprend un pignon 23a ou 23b qui est en prise constante avec la grande couronne 12. Dans l'exemple de construction, le pignon d'attaque 23a est associé à un pignon intermédiaire de réduction 24 pour une raison que ressort de ce qui suit. Le pignon intermédiaire de réduction 24 est monté sur un arbre intermédiaire 25 qui est porté par des paliers 26 respectivement délimités dans les cloisons 5 et 6.

Selon l'invention le mode de construction retenu consiste à réaliser la grande couronne 12 sous la forme d'une cloche à denture périphérique droite interne. De la sorte, il devient possible de loger à l'intérieur de son volume les différents paliers et pignons intermédiaires et d'attaque des lignes d'arbres et, par suite, de réduire notablement le volume de la chambre 7.

La ligne d'arbres A supporte à l'intérieur de la chambre 8 un pignon 27 qui est chargé d'assurer l'entraînement de la ligne d'arbres A à partir d'un pignon menant 28 calé sur l'arbre d'entrée 13. Le pignon d'entraînement 27 est libéré ou immobilisé angulairement d'avec la ligne d'arbres A par l'intermédiaire d'un embrayage 29 possédant la caractéristique d'être maintenu, par un organe de rappel élastique 30, dans un état stable ou de repos dans lequel il établit la solidarisation angulaire entre le pignon d'entraînement 27 et la ligne d'arbres A.

La ligne d'arbres B porte dans la chambre 8 un pignon d'entraînement 31 qui est mû en rotation à partir du pignon 28 par l'intermédiaire du pignon 27 avec lequel il engrêne en parmanence. Le pignon d'entraînement 31 comporte un nombre de dents différent du pignon menant 28 et un nombre inférieur à celui du pignon d'entraînement 27 de la ligne d'arbres A. Le pignon 31 est monté libre en rotation sur la ligne d'arbres B de laquelle il peut être solidarisé angulairement par l'intermédiaire d'un embrayage 32, de même constitution que l'embrayage 29 décrit précédemment. L'embrayage 32 comporte donc aussi un organe élastique de rappel 33 agissant pour maintenir toujours le pignon d'entraînement 31 en relation angulaire avec la ligne d'arbres B.

Selon une caractéristique constuctive, il est prévu de disposer les embrayages en bout des lignes d'arbres et à l'intérieur de la chambre 8. De la sorte, il devient possible de placer les pignons d'entraînement dans un plan commun. Ceci permet de réduire notablement le volume occupé par l'ensemble de ces organes.

Selon la caractéristique de l'invention, les embrayages 29 et 32 sont prévus occuper un état de repos maintenant la liaison angulaire entre les pignons 27 et 31 et les lignes d'arbres A et B respectivement et, par conséquent, chaque embrayage est associé à une commande propre permettant de la faire passer à un seconde position dans laquelle il libère angulairement la ligne d'arbres correspondante du pignon d'entraînement qui est alors libre de tourner par rapport à la ligne d'arbres. La commande de débrayage indépendante propre à chaque embrayage 29 ou 32 peut être de tout type convenable en fonction de l'énergie disponible et il peut être prévu, notamment, de monter des embrayages fonctionnant à l'énergie électrique, hydraulique, pneumatique, voire dans certains cas mécanique. De préférence, chaque commande individuelle est rapportée à une commande de sélection 34 conçue pour réaliser simultanément le maintien en position embrayée de l'un des embrayages et le passage à l'état débrayé de l'autre embrayage pour des raisons qui ressortent de ce qui suit.

Dans le cas où les lignes d'arbres sont en nombre supérieur à deux, la commande sélective 34 est conçue de manière que la sélection en position d'utilisation du rapport de l'une quelconque des lignes d'arbres résulte de l'actionnement en position débrayée simultanée des embrayages des différentes autres lignes d'arbres entrant dans la constitution du multiplicateur.

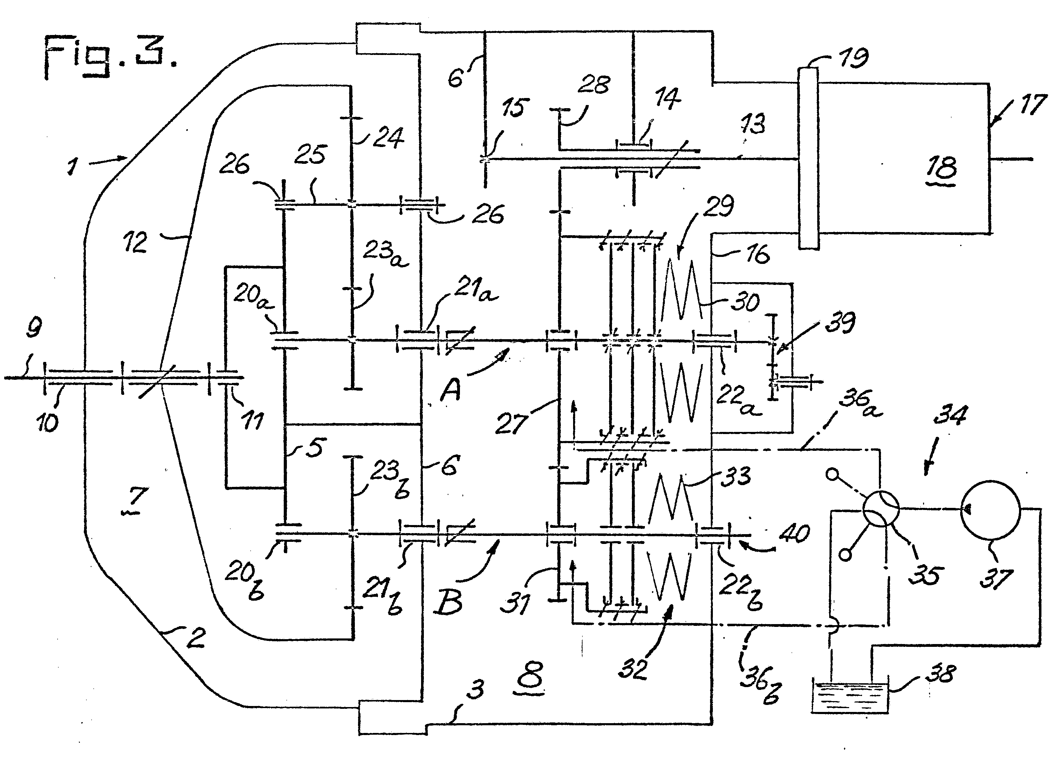

Dans l'exemple illustré à la fig. 3, la commande de sélection 34 est du type à deux positions et se trouve illustrée sous la forme d'une vanne distributrice 35 pouvant être utilisée, par exemple, en cas d'application d'énergie hydraulique. Une disposition semblable pourrait être retenue en cas d'utilisation d'énergie pneumatique et la vanne distributrice 35 pourrait être aussi remplacée par un équipement électrique ou électronique équivalent si l'énergie utilisée pour commander le débrayage des embrayages 29 et 32 est l'électricité.

La vanne distributrice 35 est du type à double voie de manière à pouvoir raccorder deux circuits d'alimentation 36a et 36b menant aux embrayages 29 et 32 respectivement, à une source de production d'énergie hydraulique 37 et à une bâche 38 et inversement.Le multiplicateur de gammes décrit ci-dessus fonctionne de la façon suivante:

En supposant qu'aucune énergie, hydraulique dans le cas présent, ne soit fournie par la pompe 37, les organes élastiques 30 et 33 maintiennent les embrayages 29 et 32 dans leur état de repos ou stable de solidarisation angulaire entre les pignons 27 et 31 et les lignes d'arbres A et B. Etant donné que les lignes d'arbres A et B sont par ailleurs engrênées avec la grande couronne 12 et que les rapports de multiplication sont différents entre les arbres A et B, la position embrayée des deux embrayages 29 et 32 réalise un blocage et une immobilisation angulaire, entre l'arbre menant 13 et l'arbre de sortie 9. Dans un tel état, le multiplicateur de gammes représente donc un arrêt, un verrou, un blocage, ou un frein entre l'organe récepteur associé à l'arbre de sortie 9 et l'arbre d'entrée 13 associé à l'organe moteur 17.

Lorsque de l'énergie hydraulique est fournie par la pompe 37, le fluide délivré emprunte la commande 36a dans l'exemple schématisé à la fig. 3, et assure donc l'alimentation de l'embrayage 29 alors que simultanément, par la vanne de sélection 35, l'embrayage 32 est maintenu par la commande 36b en liaison avec le retour à la bâche 38. Par conséquent, le fluide hydraulique sous pression agit sur l'embrayage 29 contre l'action de l'organe élastique de rappel 30 et produit donc le débrayage ou la désolidarisation angulaire entre le pignon 27 et la ligne d'arbres A. Au contraire, l'embrayage 32 reste placé sous l'influence de l'organe élastique 33 qui maintient ledit embrayage dans une position stable ou de repos dans laquelle est réalisee la solidarisation angulaire entre le pignon 31 et la ligne d'arbres B.

Dans cet état, la rotation de l'organe moteur 17, quel que soir sa constitution ou le principe génératur de sa rotation, fait tourner l'arbre 13 dont le pignon menant 28 entraîne le pignon 27 amené à tourner librement sur la ligne d'arbres A sans action positive sur cette ligne. Le pignon 27 fait tourner le pignon 31 qui assure l'entraînement en rotation de la ligne B par l'intermédiaire de l'embrayage 32. La rotation de la ligne d'arbres B est transmise au pignon d'attaque 23b qui fait tourner la couronne 12 entraînant la rotation de l'arbre de sortie 9 chargé de commander l'organe récepteur.

Dans cet état de fonctionnement et, compte tenu de la présence du pignon 27, la ligne d'arbres B est entraînée à vitesse élevée et à faible couple.

Si, dans l'état de fonctionnement ci-dessus, il devient nécessaire di fournir à l'organe récepteur entraîné par l'arbre de sortie 9 une vitesse relativement faible mais ûn fort couple, il suffit de commander la vanne de distribution 35 jusque dans la position représentée en pointillé de manière à diriger le fluide hydraulique sous pression vers l'embrayage 32 et à placer l'embrayage 29 en relation avec le retour à la bâche 38. Il s'ensuit une inversion des positions relatives des embrayages, de sorte que l'embrayage 29 réalise la solidarisation angulaire entre le pignon 27 et la ligne d'arbres A, alors qu'au contraire l'embrayage 32 libère le pignon 31 par rapport à la ligne d'arbres B. La rotation du pignon menant 28 est ainsi transmise, avec le rapport de réduction introduit par le pignon 27, à la ligne d'arbres A qui, par l'intermédiaire de son pignon d'attaque 23a et du pignon intermédiaire 24, fait tourner la grande couronne 12 chargée de commander la rotation de l'arbre 9. Il y a lieu de noter que la présence du pignon intermédiaire 24 est indispensable pour que, dans les deux cas de fonctionnement ci-dessus, la couronne 12 soit entraînée dans le même sens de rotation.

Les deux états de fonctionnement ci-dessus montrent qu'il est possible, par l'intermédiaire du multiplicateur selon l'invention, de transmettre, à un organe récepteur par rapport à un organe moteur, une rotation faisant intervenir des gammes de vitesse et de rotation différentes par rapport à une rotation initiale de l'organe moteur qui, elle, est déjà déterminée en fonction du réglage ou de la commande du cycle de transformation de l'organe moteur.

Par conséquent, le multiplicateur de l'invention assume deux fonctions, l'une d'immobilisation et de verrouillage entre l'arbre de sortie et l'arbre d'entrée dans sa position inerte, et l'autre, de variation de gammes de rotation entre lesdits éléments. Il devient donc possible, à partir d'une gamme de vitesses de rotation préétablies et conférées, par exemple, par une boîte de vitesses ou par les possibilités de variation de débit d'une pompe hydraulique, de faire intervenir, en cas de besoin, une double gamme de chaque plage de la gamme initiale fixée et, par conséquent, d'adapter les conditions de rotation de l'arbre de sortie 9 en fonction des conditions d'utilisation de l'organe récepteur.

A cet égard, il faut noter que la conseption du multiplicateur est choisie pour obtenir un produit final compact et robuste dont tous les trains de pignons sont dans deux plans et dont la sélection de la ligne d'arbre en service résulte de la commande positive en déverrouillage ou en débrayage de la ou des autres lignes par l'intermédiaire du ou des embrayages propres à fonction d'embrayage à l'état de repos. L'ensemble de ces caractéristiques fait que le multiplicateur peut être facilement organisé et comprendre des trains de pignons ou des lignes d'arbres ne présentant pas de »trou« ou de solution de continuité entre les courbes de couples et de vitesses qu'ils établissent. Cet avantage est particulièrement important lorsqu'il est recherché un changement de gamme en charge, c'est-à-dire sans interruption de l'entraînement de l'organe récepteur et qu'il est souhaité qu'un tel passage s'effectue sans perturbation de la rotation dudit organe.

Dans ce qui précède, il est indiqué que le passage ou la sélection de l'un des rapports de multiplication est assuré par la commande de la vanne distributrice 35. Il est certain qu'une telle commande peut être exécutée de nombreuses façon différentes en mettant en oeuvre des énergies de transmission diverses et que le contrôle de la position de la vanne peut aussi être placé sous la dépendance des informations de sortie d'un détecteur des variations des paramètres de charges appliquées à l'organe récepteur ou, éventuellement, à l'arbre de sortie 9 du multiplicateur. Dans cette dernière éventualité, le changement de sélection intervient alors auromatiquement dès que les charges appliquées à l'arbre de sortie varient au-delà d'une limite pré-déterminée établie.

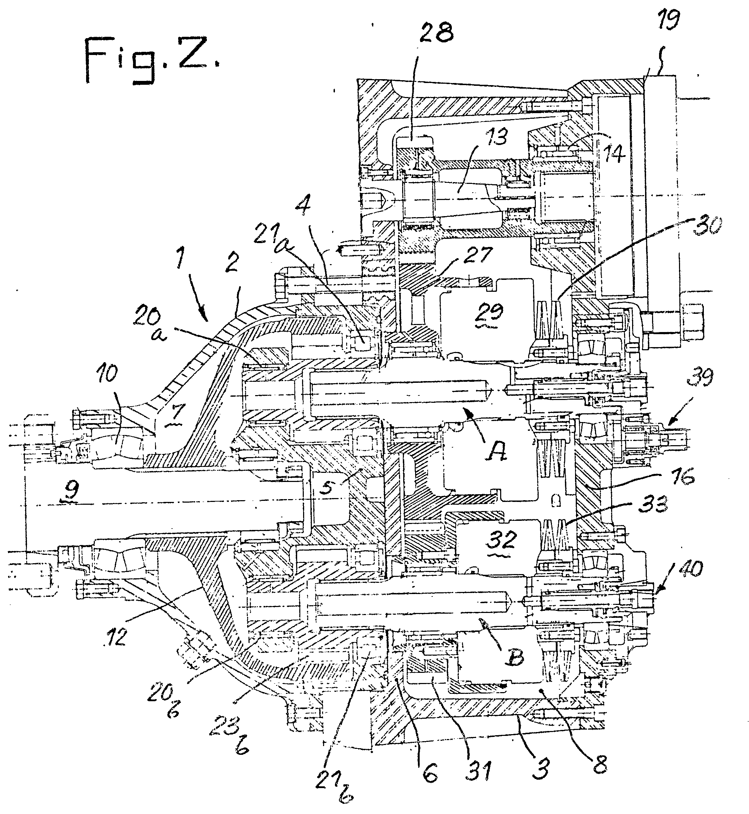

La fig. 2 ainsi que le schéma selon la fig. 3 montrent qu'il est possible d'envisager de ménager sur le flasque 16 des sorties 39 et 40 des lignes d'arbres A et B, ces sorties pouvant être utilisées pour commander l'entraînement en rotation d'accessoires divers.

Le multiplicateur conforme à l'invention peut être utilisé dans de très nombreuses applications. En effet, il est possible de mettre en oeuvre un tel dispositif sur des machines d'usinage à fonctionnement automatique, de manière à commander la variation de gammes de vitesses de l'arbre 9 en fonction de la charge appliquée à l'outil de travail par son fonctionnement sur ou dans une pièce d'ouvrage.

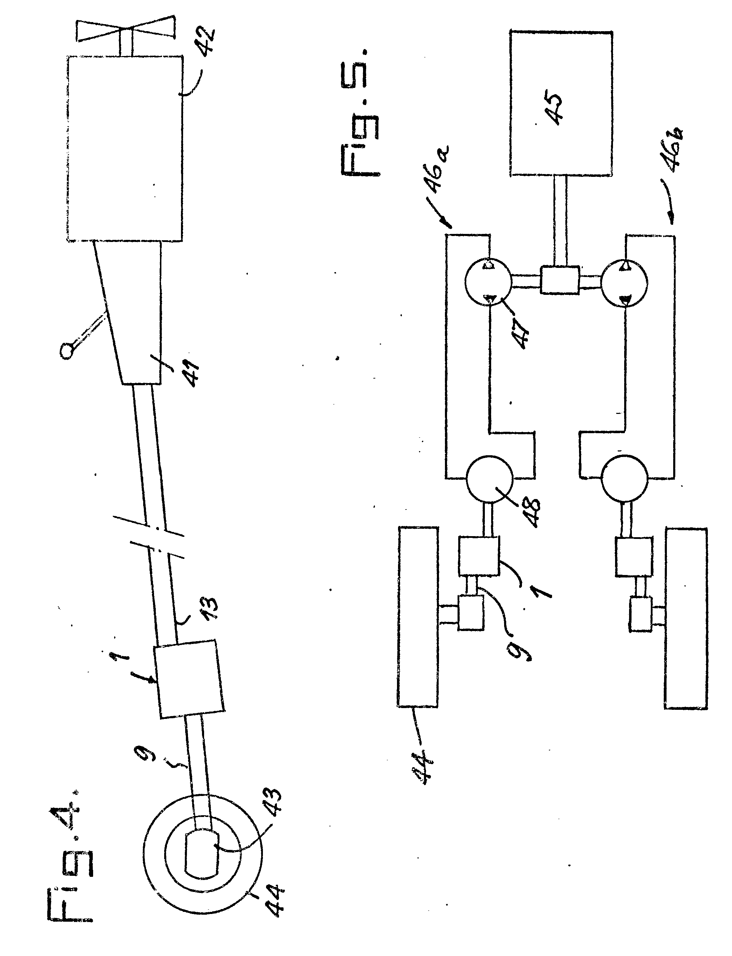

Il est également possible de considérer le mutliplicateur de gammes comme un dispositif adaptable sur la transmission des véhicules automobiles au sens général. Dans cette application, la fig. 4 montre la mise en oeuvre du dispositif entre la boîte de vitesses 41 associée à un moteur 42 et le différentiel 43 de transmission de mouvement aux organes de éplacement 44 schématisés, à titre d'exemple, sous la forme de roues.

La fig. 5 montre un autre exemple d'application dans lequel le vehicule automobile comprend un organe moteur 45 chargé d'entraîner en fonctionnement deux lignes 46a et 46b comprenant chacune une pompe hydraulique 47 à débit variable assurant l'alimentation d'un moteur hydraulique 48 dont l'arbre de sortie 49 représente l'arbre d'entrée 13 du dispositif multiplicateur 1. Dans un tel cas, chaque arbre de sortie 9 assure l'entraînement en rotation de l'un des organes de déplacement 44 du véhicule qui est ainsi doté de deux lignes de puissance motrices pour deux organes de déplacement qui peuvent être indifféremment des roues, des chaînes ou des chenilles.

Dans cette application particulière, le multiplicateur de gammes selon l'invention présente un intérêt certain sur le plan de l'encombrement, car sa compactié permet d'envisager de le disposer dans la jante d'une roue ou dans le barbotin d'entraînement d'une chenille.

**Revendications**

1. Multiplicateur de gammes pour l'entraînement en rotation d'un arbre transmetteur de puissance comprenant un carter (1) contenant un arbre de sortie (9) solidaire d'une grande couronne (12), un arbre d'entrée (13), muni d'un pignon menant (28) et une pluralité de lignes d'arbres (A, B), qui sont chacune, d'une part, munie d'un pignon d'attaque (23a, 23b) en prise permanente avec la grande couronne (12), et, d'autre part, associée à un pignon d'entraînement (27, 31), en rotation à partir du pignon menant (28), ledit pignon d'entraînement (27, 31) etant associé à un embrayage (29, 32) caractérisé en ce que l'embrayage (29, 32) de chaque ligne d'arbres (A, B) est du type à état de repos embrayé, conférant au multiplicateur, en état inerte une fonction de blocage et d'immobilisation angulaire entre l'arbre de sortie (9) et l'arbre d'entrée (13) par l'intermédiaire des lignes d'arbres (A, B).

2. Multiplicateur selon la revendication 1, caractérisé en ce que les embrayages (29, 32) établissent, dans leur état de repos, une liaison entre les lignes d'arbres (A, B) et les pignons d'entraînement (27, 31) qui leur correspondent et en ce que lesdits embrayages (29, 32) sont associés à une commande de sélection (34) individuelle de débrayage.

3. Multiplicateur selon la revendication 1 ou 2, caractérisé en ce que les embrayages (29, 32) sont associés à une commande de sélection (34) actionnant en état débrayé les embrayages des lignes d'arbres hors service et maintenant en l'état embrayé l'embrayage de la ligne d'arbre sélectionnée.

4. Multiplicateur selon la revendication 3, caractérisé en ce que la commande de sélection est du type hydraulique.

5. Multiplicateur selon la revendication 4, caractérisé en ce que la commande de sélection est placée sous la dépendance d'un sélecteur (35), influencé par les informations délivrées par un détecteur des variations des paramètres de charge appliquée à l'arbre de sortie du multiplicateur.

6. Application du multiplicateur selon l'une des revendications 1 à 5, à la transmission de puissance aux organes de déplacement d'un véhicule automobile.

7. Application selon la revendication 6, caractérisée en ce que le multiplicateur est interposé entre l'ensemble moteur et le différentiel de renvoi aux organes de déplacement.

8. Application selon la revendication 6, caractérisée en ce que le multiplicateur est interposé directement en amont de chaque organe de déplacement.

**Patentansprüche**

1. Gangvervielfacher-Zwischengetriebe zum Antrieb einer Kraftübertragungswelle, bestehend aus einem Gehäuse (1), einer Ausgangswelle (9), an welche ein großer Innenzahnkranz (12) angebaut ist, einer Eingangswelle (13) mit Antriebsritzel (28), mehreren Vorgelegewellen (A, B), jede mit einem Antriebsritzel (23a, 23b) in ständigem Eingriff mit dem großen Innenzahnkranz (12) und einem Abtriebsritzel (27, 31), welches durch das Antriebsritzel (28) angetrieben wird, wobei das Abtriebsritzel (27, 31) mit einer Kupplung (29, 32) verbunden ist und das gesamte Getriebe dadurch gekennzeichnet ist, daß die Kupplung (29, 32) jeder Vorgelegewelle (A, B) jeweils im nicht betätigten Zustand eingerückt ist, so daß beim Ausbleiben jeglicher Steuerkraft die Ausgangswelle (9) und die Eingangswelle (13) sich gegenseitig über die Vorgelegewellen (A, B) blockieren.

2. Gangvervielfacher-Zwischengetriebe nach Anspruch 1, dadurch gekennzeichnet, daß bei nicht betätigten Kupplungen (29, 32), die Vorgelegewellen (A, B) die entsprechenden Abtriebsritzel (27, 31) antreiben und daß die Kupplungen (29, 32) über eine Steuerschaltung (34) einzeln eingerückt werden.

3. Ganvervielfacher-Zwischengetriebe nach Anspruch 1 oder 2, dadurch gekennzeichnet, daß die Steuerschaltung (34) die Kupplungen der nicht gewählten Vorgelegewellen ausgerückt und die Kupplungen der gewählten Vorgelegewelle eingerückt hält.

4. Gangvervielfacher-Zwischengetriebe nach Anspruch 3, dadurch gekennzeichnet, daß eine hydraulische Steuerschaltung verwendet wird.

5. Gangvervielfacher-Zwischengetriebe nach Anspruch 4, dadurch gekennzeichnet, daß die Steuerung der Kupplungen über einen Wählschalter (35) erfolgt, der seinerseits durch die von einem Meldegeber übermittelten Belastungsänderungen an der Ausgangswelle des Gangvervielfacher-Zwischengetriebes angesteuert wird.

6. Verwendung des Gangvervielfacher-Zwischengetriebes nach Anspruch 1 bis 5, zur Kraftübertragung auf die Antriebsräder eines Kraftfahrzeugs.

7. Verwendung nach Anspruch 6, dadurch gekennzeichnet, daß das Gangvervielfacher-Zwischengetriebe zwischen den Motorgetriebeblock und das mit den Antriebsrädern verbundene Differential gebaut wird.

8. Verwendung nach Anspruch 6, dadurch gekennzeichnet, daß das Gangvervielfacher-Zwischengetriebe direkt vor die Antriebsräder gebaut wird.

**Claims**

1. Step-up transmission to rotate a power transmission shaft comprising a housing (1) containing an output shaft (9) integral with a large ring gear (12); an input shaft (13), equipped with a drive pinion (28) and a plurality of drive shafts (A, B), each of which is equipped with an intermediate pinion (23a, 23b), in constant mesh with said ring gear (12) and associated with a drive pinion (27, 31), rotated by said drive pinion (28); each driven pinion (27, 31) is associated with a clutch (29, 32); transmission wherein said clutches (29, 32) of said shafts (A, B) are of a type which is engaged when deactivated; this enables said transmission in inert condition to lock and immobilize angular movement of said output shaft (9) with respect to said input shaft (13) via said drive shafts (A, B).

2. The invention set forth in claim 1, wherein said clutches (29, 32), when deactivated, establish a connection between said drive shafts (A, B) and corresponding driven pinions (27, 31), in which said clutches (29, 32) are associated with an individual declutch selector control (34).

3. The invention set forth in either claim 1 or claim 2, wherein said clutches (29, 32) are associated with a selector control (34) which activates the clutches of deactivated shafts when disengaged and maintains the clutch of the selected shaft engaged.

4. The invention set forth in claim 3, wherein said selector control is hydraulic.

5. The invention set forth in claim 4, wherein said selector control is slaved to a selector (35) influenced by data transmitted by a load parameter variation detector, for loads applied to said output shaft.

6. The invention set forth in one of claims 1 to 5 applied to power transmission to the running gear of an automative vehicle.

7. The invention set forth in claim 6 wherein said transmission is installed between the engine assembly and the running gear differential drive.

8. The invention set forth in claim 6, wherein said transmission is installed immediately upline of each of said running gear parts.

Fig.1.

Fig.2.

Fig.3.

0 028 192

Fig. 4.

Fig. 5.